# EUROPÄISCHE PATENTSCHRIFT

(11) **EP 0 638 859 B1**
(45) Veröffentlichungstag und Bekanntmachung des Hinweises auf die Patenterteilung: **29.09.1999**
(21) Anmeldenummer: 94111497.7
(22) Anmeldetag: 22.07.1994
(51) Int. Cl.: G06F 7/48

(54) **Signalverarbeitungseinrichtung**
Signal processing device
Dispositif de traitement de signaux

(30) Priorität: 09.08.1993 DE 4326732
(43) Veröffentlichungstag der Anmeldung: 15.02.1995
(73) Patentinhaber: SIEMENS AKTIENGESELLSCHAFT, 80333 München (DE)
(72) Erfinder: Brückmann, Dr. Dieter, D-40670 Meerbusch (DE); Preuss, Walfried, Dipl.-Ing., D-85635 Höhenkirchen-Siegertsbrunn (DE)

(56) Entgegenhaltungen:
- US-A- 4 454 589
- PROCEEDINGS OF THE IEEE 1988 CUSTOM INTEGRATED CIRCUITS CONFERENCE, 16-19 MAY 1988, ROCHESTER, NY, USA, 1988 IEEE, NEW YORK, USA, Seiten 8.7.1-8.7.6, S. AZIM ET AL. 'A CUSTOM DSP CHIP TO IMPLEMENT A ROBOT MOTION CONTROLLER'
- IEEE JOURNAL OF SOLID-STATE CIRCUITS, Bd. 24,Nr. 6, Dezember 1989 NEW YORK US, Seiten 1662-1667, XP 000100499 K. KIKUCHI ET AL. 'A Single-Chip 16-bit 25-ns Real-Time Video /Image Signal Processor'
- IEEE JOURNAL OF SOLID-STATE CIRCUITS, Bd. 23,Nr. 3, Juni 1988 NEW YORK US, Seiten 830-835, M. ISHIKAWA ET AL. 'An Adaptive Line Equalizer VLSI Using Digital Signal Processing'
- ELECTRONIQUE RADIO PLANS, Nr. 543, Februar 1993 PARIS FR, Seiten 25-34, XP 000332001 J. BEDU 'Les DSPs Analog Devices'

## Beschreibung

Die Neuerung betrifft eine digitale Signalverarbeitungseinrichtung insbesondere für Anwendungen als ADPCM-Codec.

Insbesondere in der mobilen Kommunikation werden heutzutage Codecs benötigt, die gegenüber den bisherigen Codecs eine Datenreduktion um die Hälfte durchführen. Ein gängiges Verfahren zur Datenreduktion ist der ADPCM-Algorithmus, der bereits seit langem durch die CCITT-Norm G.721 standardisiert ist. Ein besonderes Merkmal dieses Algorithmus' ist, daß nur sehr wenige Multiplikationen und Zwischenspeicheroperationen benötigt werden. Im wesentlichen sind nur Schiebe- und Additionsoperationen sowie Datenformatkonvertierungen, also Umwandlungen von Festkommadarstellung in Gleitkommadarstellung und umgekehrt, auszuführen. Außerdem sollten moderene Codecs eine komfortable Tonerzeugung ermöglichen, sowie eine gewisse Flexibilität bei der Implementierung von Zusatzfunktionen bieten.

Bisher wurden zur Realisierung der Codec-Funktionen entweder Standardsignalprozessoren eingesetzt oder aber speziell zugeschnittene Logikschaltungen verwendet. Die heute üblichen Mehrzweck-Signalprozessor-Architekturen sind hinsichtlich einer schnellen Ausführung von Multiplikationen und Zwischenspeicheroperationen optimiert, sind jedoch aber für den ADPCM-Algorithmus weniger geeignet. Insbesondere Formatkonvertierungen und Zusatzfunktionen wie Tonerzeugung, Echokompensation usw. können nur vergleichsweise sehr umständlich implementiert werden. Zudem wird der sehr mächtige Befehlssatz eines Mehrzweck-Signalprozessors bei weitem nicht ausgenutzt. Daher ist diese Lösung hinsichtlich der Kosten und des Leistungsverbrauchs nicht optimal. In dieser Hinsicht sind Realisierungen mit speziell zugeschnittenen Logikschaltungen günstiger. Jedoch bieten sie nur eine sehr geringe Flexibilität hinsichtlich der Implementierung von Zusatzfunktionen.

Aufgabe der Neuerung ist es daher, eine digitale Signalverarbeitungseinheit anzugeben, die trotz hoher Flexibilität einen geringen Schaltungsaufwand erfordert und einen geringen Leistungsverbrauch aufweist.

Diese Aufgabe wird gelöst durch eine digitale Signalverarbeitungseinrichtung
mit mindestens drei Datenregistern und einem Flagregister, die über einen Datenbus mit mindestens einer peripheren Einheit binär kodierte Daten austauschen,
mit zwei Schieberegistern, die jeweils mit dem Inhalt eines der Datenregister geladen werden,
mit zwei jeweils den Schieberegistern nachgeschalteten Modifikationseinheiten, die bei entsprechender Störung einen durch den Inhalt des jeweils zugehörigen Schieberegisters gebildeten Operanden invertieren oder durch seinen Absolutwert ersetzen oder durch Null ersetzen oder unverändert beibehalten,
mit einer Arithmetikeinheit, die bei entsprechender Steuerung entweder die beiden von den Multiplikationseinheiten bereitgestellten Operanden sowie ein im Flagregister abgelegtes Überlaufbit miteinander addiert, das Additionsergebnis; in einem der Datenregister ablegt und abhängig vom Vorlegen eines Überlaufs das Überlaufbit im Flagregister setzt oder die Operanden miteinander vergleicht und das Vergleichsergebnis im Flagregister ablegt,
mit einem Multiplikationsregister, das durch die Arithmetikeinheit und über den Datenbus durch mindestens eine periphere Einheit beschreibbar ist,
mit einem Logikblock, der in Abhängigkeit vom Inhalt des Multiplikationsregisters die Schiebeoperation mindestens eines der beiden Schieberegister steuert, und mit einer programmierbaren Ablaufsteuerung zur programmabhängigen Steuerung des Datenaustausches zwischen den Datenregistern und mindestens einer peripheren Einheit und zwischen dem Flagregister und mindestens einer peripheren Einheit sowie zur programmabhängigen Steuerung der Operationen der Schieberegister, der Modifikationseinheit und der Arithmetikeinheit.

Eine Weiterbildung der Neuerung bezieht sich auf eine Sättigungseinheit, die der Arithmetikeinheit nachgeschaltet ist und die bei entsprechender Steuerung durch die Ablaufsteuerung das Datenwort am Ausgang der Arithmetikeinheit auf einen bestimmten Wert setzt.

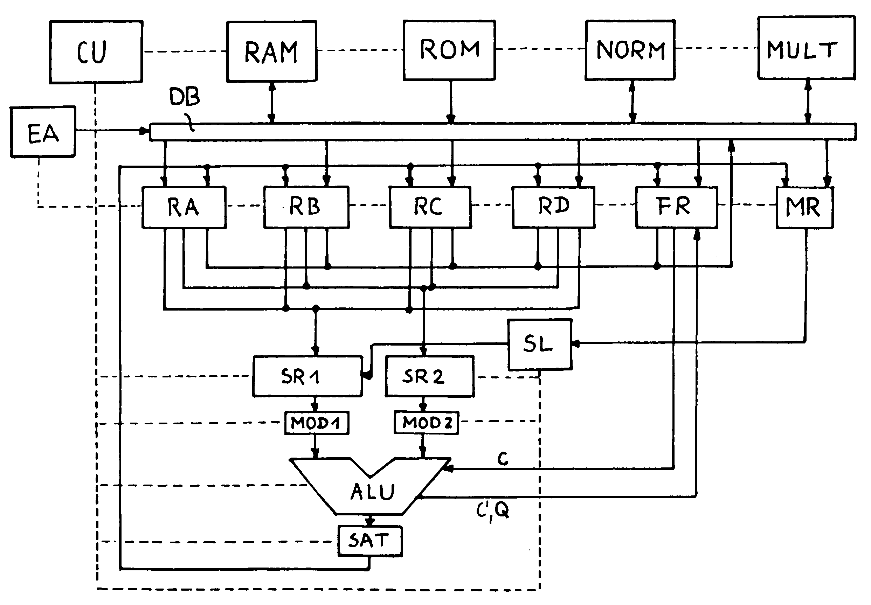

Ausgestaltungen der Neuerung betreffen periphere Einheiten, nämlich eine Normierungseinheit, die Daten in Festkommadarstellung in Daten in Gleitkommadarstellung und umgekehrt konvertiert, eine Multiplikationseinheit, die zwei ihr über den Datenbus zugeführte Datenworte miteinander multipliziert und über den Datenbus wiederum ausgibt, sowie flüchtige und nichtflüchtige Speichereinheiten.
Die Neuerung wird anhand des einzigen in der Figur der Zeichnung dargestellten Ausführungsbeispiels näher erläutert.

Die in der Zeichnung gezeigte digitale Signalverarbeitungseinrichtung weist vier Datenregister RA, RB, RC, RD sowie ein Flagregister FR auf, die über einen Datenbus DB mit peripheren Einheiten, nämlich einem flüchtigen Speicher RAM, einer Normierungseinheit NORM und einer Multipliziereinheit MULT binär kodierte Daten austauscht. Über den Datenbus DB kann auch ein nichtflüchtiger Speicher ROM gelesen werden. Außerdem sind zwei Schieberegister SR1 und SR2 vorgesehen, die jeweils auf den Ausgang eines der Datenregister RA, RB, RC, RD aufschaltbar sind und dabei jeweils mit dem Inhalt des jeweiligen Datenregisters geladen werden können. Den Schieberegistern SR1 und SR2 ist jeweils eine Modifikationseinheit MOD1 und MOD2 nachgeschaltet, die bei entsprechender Steuerung einen durch den Inhalt des jeweils zugehörigen Schieberegisters SR1 bzw. SR2 gebildeten Operanden invertieren oder durch seinen Absolutwert ersetzen oder durch Null ersetzen oder unverändert beibehalten. Die derart veränderten bzw. unveränderten Operanden werden durch eine Artihmetikeinheit ALU weiter bearbeitet. Dazu werden bei entsprechender Steuerung entweder die beiden veränderten bzw. unveränderten Operanden unter Berücksichtigung eines im Flagregister FR abgelegten Überlaufbits C miteinander addiert oder verglichen. Ein bei der Addition auftretendes Überlaufbit bzw. das Ergebnis des Vergleichs wird durch Setzen entsprechender Bits C, Q im Flagregister FR angezeigt und das Summationsergebnis über eine Sättigungseinheit SAT, die bei entsprechender Steuerung das Datenwort am Ausgang der Arithmetikeinheit ALU auf einen bestimmten Wert, beispielsweise den Maximalwert setzt, an eines der Datenregister RA, RB, RC, RD weiterleitet.

Eine programmierbare Ablaufsteuerung CU steuert in Abhängigkeit des Programms sämtliche Funktionen der Signalverarbeitungseinrichtung, also den Datenaustausch zwischen den Datenregistern und den peripheren Einheiten, den Datenaustausch zwischen dem Flagregister und den peripheren Einheiten sowie die Operationen der Schieberegister SR1, SR2, der Modifikationseinheiten MOD1, MOD2, der Arithmetikeinheit ALU und der Sättigungseinheit SAT. Darüber hinaus wird durch die Ablaufsteuerung CU auch ein Multiplikationsregister MR, das durch die Arithmetikeinheit ALU und über den Datenbus DB durch mindestens eine periphere Einheit beschreibbar ist, und ein Logikblock SL, der in Abhängigkeit vom Inhalt des Multiplikationsregisters MR die Schiebeoperation des Schieberegisters SR1 ausführt, gesteuert.

Beispielsweise über eine Ein-Ausgabeeinheit EA, die ebenfalls an den Datenbus DB angeschlossen ist, werden unter Steuerung der Ablaufsteuerung CU bestimmten Signalen zuzuordnende Datenworte in den flüchtigen Speicher RAM eingelesen. Die im flüchtigen Speicher RAM und im nichtflüchtigen Speicher ROM abgelegten Datenworte werden beispielsweise der Normierungseinheit NORM, der Multiplikationseinheit MULT sowie den Datenregistern RA und RB zugeführt. Anschließend werden die Inhalte der Datenregister RA und RB jeweils in die Schieberegister SR1 bzw. SR2 eingelesen. Der Inhalt des Schieberegister SR1 kann über den Logikblock SL eine Schiebeoperaton nach links oder rechts abhängig vom Inhalt des Multiplikationsregisters MR um 0 bis 15 Bits geschoben werden. Das Schieberegister SR2 wird ausschließlich von der Ablaufsteuerung CU gesteuert und erlaubt Schiebeoperationen um 1 Bit nach rechts und 15 Bit nach links. Außerdem ist das Schieberegister SR1 auch unabhängig vom Logikblock SL durch die Ablaufsteuerung CU steuerbar. Nach erfolgten Schiebeoperationen werden die beiden in den Schieberegistern SR1 und SR2 enthaltenen Operanden durch die Modifikationseinheiten MOD1 und MOD2 bearbeitet. Bei entsprechender Vorgabe durch das Programm wird beispielsweise der jeweilige Operand in der Modifikationseinheit MOD1 nicht verändert und bei der Modifikationseinheit MOD2 invertiert. Anschließend werden beide Operanden miteinander addiert und ein gegebenenfalls im Flagregister FR gesetztes Überlaufbit C ebenfalls hinzuaddiert. Ein hierbei auftretender Überlauf wird durch Setzen des entsprechenden Bits C im Flagregister FR angezeigt. Das Summationsergebnis wird über die Sättigungseinheit SAT, die in diesem Fall programmbedingt nicht aktiv wird, in das Datenregister RC eingelesen. Gleichzeitig zu diesen Operationen wurde durch die Normierungseinheit NORM eine Datenkonvertierung, beispielsweise von Gleitkommadarstellung in Festkommadarstellung, und durch die Multiplikationseinheit MULT eine Multiplikation durchgeführt. Das Ergebnis der Multiplikation wird in das Datenregister RD eingelesen und das Ergebnis der Konvertierung in das Datenregister RA, worauf beispielsweise die Inhalte der Datenregister RC und RD in die Schieberegister SR1 und SR2 übertragen werden.

Daraus ist ersichtlich, daß mit geringem schaltungstechnischem Aufwand und daher geringem Energieverbrauch eine hohe Flexibilität erreicht wird. Es wird vor allem durch eine geringe Anzahl möglicher Operationen in Verbindung mit einer Parallelverarbeitung zeitintensiver Operation erreicht. Im Bedarfsfalle können natürlich auch weitere periphere Einheiten hinzugefügt bzw. nicht benötigte periphere Einheiten weggelassen werden.

## Patentansprüche

1. Digitale Signalverarbeitungseinrichtung mit mindestens drei Datenregistern (RA, RB, RC, RD) und einem Flagregister (FR), die über einen Datenbus (DB) mit mindestens einer peripheren Einheit (RAM, ROM, NORM, MULT, EA) binär kodierte Daten austauschen,
mit zwei Schieberegistern (SR1, SR2), die jeweils mit dem Inhalt eines der Datenregister (RA, RB, RC, RD) geladen werden,
mit zwei jeweils den Schieberegistern (SR1, SR2) nachgeschalteten Modifikatonseinheiten (MOD1, MOD2), die bei entsprechender Steuerung einen durch den Inhalt des jeweils zugehörigen Schieberegisters (SR1, SR2) gebildeten Operanden invertieren oder durch seinen Absolutwert ersetzen oder durch Null ersetzen oder unverändert beibehalten,
mit einer Arithmetikeinheit (ALU), die bei entsprechender Steuerung entweder die beiden von den Modifikationseinheiten (MOD1, MOD2) bereitgestellten Operanden sowie einen im Flagregister (FR) abgelegtes Überlaufbit (C) miteinander addiert, das Additionsergebnis in einem der Datenregister (RA, RB, RC, RD) ablegt und abhängig vom Vorliegen eines Überlaufs das Überlaufbit im Flagregister setzt, oder die Operanden miteinander vergleicht und das Vergleichsergebnis (Q) im Flagregister (FR) ablegt,
mit einem Multiplikationsregister (MR), das durch die Arithmetikeinheit (ALU) und über den Datenbus (DB) durch mindestens eine periphere Einheit (RAM, ROM, NORM, MULT, EA) beschreibbar ist,
mit einem Logikblock (SL), der in Abhängigkeit vom Inhalt des Multiplikationsregisters (MR) die Schiebeoperation mindestens eines der beiden Schieberegister (SR1, SR2) steuert, und
mit einer programmierbaren Ablaufsteuerung (CU), zur programmabhängigen Steuerung des Datenaustausches zwischen den Datenregistern (RA, RB, RC, RD) und mindestens einer peripheren Einheit (RAM, ROM, NORM, MULT, EA) oder der Arithmetikeinheit (ALU) sowie zwischen dem Flagregister (FR) und mindestens einer peripheren Einheit (RAM, ROM, NORM, MULT, EA) oder Arithmetikeinheit (ALU) und zur programmabhängigen Steuerung der Operationen der Schieberegister (SR1, SR2), der Modifikationseinheit (MOD1, MOD2) sowie der Arithmetikeinheit (ALU).

2. Signalverarbeitungseinrichtung nach Anspruch 1,
**dadurch gekennzeichnet**, daß der Arithmetikeinheit (ALU) eine Sättigungseinheit (SAT) nachgeschaltet ist, die bei entsprechender Steuerung durch die Ablaufsteuerung (CU) das Datenwort am Ausgang der Arithmetikeinheit (ALU) auf einen bestimmten Wert setzt.

3. Signalverarbeitungseinrichtung nach Anspruch 1 oder 2,
**dadurch gekennzeichnet**, daß eine periphere Einheit durch eine Normierungseinheit (NORM) gegeben ist, die Daten in Festkommadarstellung in Daten in Gleitkommadarstellung und umgekehrt konvertiert.

4. Signalverarbeitungseinrichtung nach einem der Ansprüche 1 bis 3,
**dadurch gekennzeichnet**, daß eine periphere Einheit durch eine Multiplikationseinheit (MULT) gegeben ist, die zwei Datenworte miteinander multipliziert.

5. Signalverarbeitungseinrichtung nach einem der Ansprüche 1 bis 4,
**dadurch gekennzeichnet**, daß als periphere Einheiten flüchtige und/oder nichtflüchtige Speichereinheiten (RAM, ROM) vorgesehen sind.

## Claims

1. Digital signal processing device having at least three data registers (RA, RB, RC, RD) and one flag register (FR) which interchange binary-coded data with at least one peripheral unit (RAM, ROM, NORM, MULT, EA) via a data bus (DB), having two shift registers (SR1, SR2) which are each loaded with the content of one of the data registers (RA, RB, RC, RD), having two modification units (MOD1, MOD2) which are each connected downstream of the shift registers (SR1, SR2) and which, under appropriate control, invert an operand formed by the content of the respectively associated shift register (SR1, SR2) or replace it with its absolute value or replace it with zero or keep it unchanged, having an arithmetic logic unit (ALU) which, under appropriate control, either adds together the two operands provided by the modification units (MOD1, MOD2) and an overflow bit (C) stored in the flag register (FR), stores the result of the addition in one of the data registers (RA, RB, RC, RD) and, depending on the presence of an overflow, sets the overflow bit in the flag register, or compares the operands with one another and stores the result of the comparison (Q) in the flag register (FR), having a multiplication register (MR) to which the arithmetic logic unit (ALU) and, via the data bus (DB), at least one peripheral unit (RAM, ROM, NORM, MULT, EA) can write information, having a logic unit (SL) which controls the shift operation of at least one of the two shift registers (SR1, SR2), depending on the content of the multiplication register (MR), and having a programmable sequence controller (CU) for program-dependent control of the data interchange between the data registers (RA, RB, RC, RD) and at least one peripheral unit (RAM, ROM, NORM, MULT, EA) or the arithmetic logic unit (ALU) and between the flag register (FR) and at least one peripheral unit (RAM, ROM, NORM, MULT, EA) or the arithmetic logic unit (ALU) and for program-dependent control of the operations of the shift registers (SR1, SR2), the modification unit (MOD1, MOD2) and the arithmetic logic unit (ALU).

2. Signal processing device according to Claim 1, characterized in that the arithmetic logic unit (ALU) has a saturation unit (SAT) connected downstream which, under the appropriate control of the sequence controller (CU), sets the data word at the output of the arithmetic logic unit (ALU) to a specific value.

3. Signal processing device according to Claim 1 or 2, characterized in that one peripheral unit is a normalization unit (NORM) which converts data represented in fixed-point form into data represented in floating-point form, and vice versa.

4. Signal processing device according to one of Claims 1 to 3, characterized in that one peripheral unit is a multiplication unit (MULT) which multiplies two data words together.

5. Signal processing device according to one of Claims 1 to 4, characterized in that the peripheral units provided are volatile and/or non-volatile storage units (RAM, ROM).

## Revendications

1. Dispositif de traitement de signaux numériques, comportant au moins trois registres (RA, RB, RC, RD) de données et un registre (FR) de drapeaux qui échangent, par l'intermédiaire d'un bus DB de données comportant au moins une unité (RAM, ROM, NORM, MULT, EA) périphérique, des données codées de manière binaire,
comportant deux registres (SR1, SR2) à décalage qui sont chargés chacun du contenu de l'un des registres (RA, RB, RC, RD) de données,
comportant deux unités (MOD1, MOD2) de modification qui sont montées en aval des registres SR1, SR2 à décalage et qui, par une commande adéquate, inversent un opérande formé par le contenu du registre (SR1, SR2) associé ou le remplacent par sa valeur absolue ou le remplacent par 0 ou le conservent inchangé,
comportant une unité (ALU) arithmétique qui, par une commande adéquate, additionne l'un à l'autre les deux opérandes mis à disposition par les unités (MOD1, MOD2) de modification ainsi qu'1 bit (C) de débordement mis en mémoire dans le registre (FR) de drapeaux, met en mémoire le résultat d'addition dans l'un des registres (RA, RB, RC, RD) de données et, suivant la présence d'un débordement, met le bit de débordement dans le registre de drapeaux, ou compare l'un à l'autre les opérandes et met en mémoire le résultat (Q) de comparaison dans le registre (FR) de drapeaux,
comportant un registre (MR) de multiplication dans lequel peuvent écrire l'unité (ALU) d'arithmétique et, par l'intermédiaire du bus (DB) de données, au moins une unité (RAM, ROM, NORM, MULT, EA) périphérique,
comportant un bloc (SL) logique qui, en fonction du contenu du registre (MR) de multiplication commande l'opération de décalage d'au moins l'un des deux registres (SR1, SR2) à décalage, et
comportant une commande (CU) de déroulement programmable pour la commande en fonction d'un programme de l'échange de données entre les registres (RA, RB, RC, RD) de données et au moins l'une des unités (RAM, ROM, NORM, MULT, EA) périphériques ou l'unité (ALU) arithmétique ainsi qu'entre le registre (FR) de drapeaux et au moins une unité (RAM, ROM, NORM, MULT, EA) périphérique ou l'unité (ALU) arithmétique, et pour commander en fonction d'un programme les opérations des registres (SR1, SR2) à décalage, de l'unité (MOD1, MOD2) de modification ainsi que de l'unité (ALU) d'arithmétique.

2. Dispositif de traitement signaux suivant la revendication 1, caractérisé en ce qu'il est monté en aval de l'unité (ALU) d'arithmétique une unité (SAT) de saturation qui, pour une commande adéquate par la commande (CU) de déroulement, met à une valeur déterminée le mot de données à la sortie de l'unité (ALU) d'arithmétique.

3. Dispositif de traitement de signaux suivant la revendication 1 ou 2, caractérisé en ce qu'une unité périphérique est donnée par une unité (NORM) pour normer qui convertit les données en présentation à virgule fixe en données en présentation à virgule flottante et inversement.

4. Dispositif de traitement de signaux suivant l'une des revendications 1 à 3, caractérisé en ce qu'une unité périphérique est donnée par une unité (MULT) de multiplication, qui multiplie l'un par l'autre deux mots de données.

5. Dispositif de traitement de signaux suivant l'une des revendications 1 à 4, caractérisé en ce qu'il est prévu, comme unité périphérique, des unités (RAM, ROM) de mémoire volatile et/ou non volatile.
